# EUROPÄISCHE PATENTANMELDUNG

(11) **EP 4 474 412 A1**
(43) Veröffentlichungstag der Anmeldung: **11.12.2024**
(21) Anmeldenummer: 24174429.1
(22) Anmeldetag: 07.05.2024
(51) Int. Cl.: C08J 9/08, C08J 9/32

(54) **SCHÄUMBARE ZUSAMMENSETZUNGEN AUF BASIS BIOGENER ROHSTOFFE**

(30) Priorität: 08.06.2023 DE 102023205354
(71) Anmelder: VOLKSWAGEN AG, 38440 Wolfsburg (DE)
(72) Erfinder: Behrendt, Nico Reiner, 39359 Havelberg/OT Nitzow (DE); Aniol, Armin, 38124 Braunschweig (DE); Große, Thomas, 38108 Braunschweig (DE); Fischer, Fabian, 30449 Hannover (DE)

(57) **Zusammenfassung**

Die Erfindung betrifft eine schäumbare Zusammensetzung umfassend mindestens ein Epoxidharz, mindestens einen Härter für Epoxidharze, mindestens ein chemisches und/oder physikalisches Treibmittel sowie mindestens einen biogenen Rohstoff sowie deren Verwendung als Kompositmaterialien sowie ein Verfahren zur Herstellung einer geschäumten Zusammensetzung.

## Beschreibung

Die Erfindung betrifft eine schäumbare Zusammensetzung auf Basis biogener Rohstoffe sowie deren Verwendung für Kompositmaterialien. Daneben betrifft die Erfindung ein Verfahren zur Herstellung einer geschäumten Zusammensetzung unter Verwendung einer solchen Zusammensetzung.

Die Herausforderung, in der heutigen Zeit erneuerbare Materialien zu produzieren, ist durch die steigende Nachfrage nach Hochleistungsprodukten in den Bereichen Medizin, Haushalt, Technik und Mobilität sowie durch das gestiegene Bewusstsein für die negativen Folgen herkömmlicher industrieller Praktiken für die Gesellschaft und die Umwelt noch gewachsen. Die grüne Chemie hat sich in den letzten Jahrzehnten als Weg in die Zukunft bei der Synthese von Polymeren und anderen Materialien erwiesen, insbesondere im Hinblick auf die negativen Auswirkungen der Abhängigkeit von traditionellen fossilen Ressourcen und synthetischen Produkten.

Aufgrund der guten Verfügbarkeit und als nachwachsende Rohstoffquelle stellen biogene Rohstoffe, die in Laub- und Nadelhölzern und Gräsern zu finden sind, eine Alternative für petrochemisch erzeugte Rohstoffe dar. Biogene Rohstoffe sind zum einen nachwachsende Rohstoffe, also Rohstoffe pflanzlichen Ursprungs, sowie Rohstoffe tierischen Ursprungs, die außerhalb des Ernährungsbereiches stofflich oder energetisch genutzt werden können.

Lignin spielt als biogener Rohstoff eine zunehmende Rolle bei der Entwicklung regenerativ erzeugter Materialien. Lignin ist eines der drei Hauptbestandteile von Holz. Es fällt in großen Mengen in der Zellstoff- und Papierindustrie an und wird dort zur Energiegewinnung verbrannt. Auch stellt Kaffeesatz einen biogenen Rohstoff dar, der als Nahrungsmittelproduktionsabfall anfällt.

Für die Herstellung Lignin-basierter Materialen sind bisher einige Ansätze bekannt. Beispielsweise beschreibt die JP 2011219734 A einen Holzschaum, der durch Aufschäumen und Aushärten einer Harzzusammensetzung erhalten wird, die Lignin, ein Aushärtungsmittel und einen Schaumbildner enthält, welche flammhemmende und antibakterielle Eigenschaften aufweist.

In der CN 115180611 A wird ein Kohlenstoffschaum auf Ligninbasis sowie ein Verfahren zu dessen Herstellung beschrieben, bei welchem Lignin, Wasser, PVA, Eisenpulver oder Borpulver oder Borsäure eingesetzt werden und PVA als Treibmittel und Nano-Eisenpulver (Fe), Borpulver (B) oder Borsäure als Katalysator verwendet werden. Es werden mit dem Verfahren Verbundmaterialien mit hoher Wärmeleitfähigkeit bereitgestellt, indem Lignin als Rohmaterial zur Herstellung von Kohlenstoffschaum eingesetzt und der Kohlenstoffschaum als 3D-Gerüst verwendet wird.

Auch unter dem Begriff "Grüne Chemie" gelten Lignine als vorteilhaft, um die ökologisch nachteiligen Petrochemie-Rohstoffe zu ersetzen. Dazu gibt die wissenschaftliche Arbeit von J. Sternberg et al. 2021 eine Übersicht des Standes der Technik von aus Lignin gewonnenen Polymeren wie Polyurethanen, Polyester, Epoxiden oder Phenolharzen. Aus wirtschaftlichen Betrachtungen ist der Einsatz von Lignin-Rohstoffen ebenfalls vorteilhaft (F.H.M. Graichen et al. 2017).

Aus dem Stand der Technik sind ebenfalls zahlreiche Beispiele für die Modifikation von konventionellen Monomeren beziehungsweise Polymeren mit Ligninen oder für das Blenden beziehungsweise Füllen von konventionellen Polymeren mit Ligninen bekannt. Lignine als Füllstoffe für Polyurethane beziehungsweise Polyurethanschäume werden beispielsweise von O.S.H. Santos et al. 2017 beschrieben, wobei der Einfluss der Ligninkonzentration bei der Verwendung von Lignin als Bindemittel in Polyurethanschäumen für die Bindung von Rohöl untersucht wird. Von X. Luo et al. 2013 wurde in einer Studie Lignin als reaktiver Füllstoff verwendet und ein Polyurethan-Bioschaum auf Basis von Polyolen unter Verwendung von Wasser als Treibmittel mit und ohne Lignin hergestellt.

Eine weitere, wichtige Klasse von Polymeren stellen Epoxidharze dar. Diese können ebenfalls mit Ligninen modifiziert werden. Grundlegende Untersuchungen zur Herstellung Ligninbasierender Epoxidharze und deren Struktur-Eigenschafts-Beziehungen sind beispielsweise von X. Lu et al. 2023 beschrieben, wobei Epoxid-Prepolymere auf Ligninbasis (das heißt glycidyliertes Lignin) direkt über Epichlorhydrin modifiziert wird. Nach einer Mischung mit Bisphenol-A-diglycidylether (DGEBA) können solche Epoxid-Duroplaste auf Ligninbasis durch Aushärtungsreaktionen hergestellt werden, um verbesserte mechanische und thermische Eigenschaften zu erzielen. Ebenfalls werden von C. Gioia et al. 2020 neue Strategien zur Anpassung von Materialien auf Ligninbasis an hochwertige Anwendungen und Lignin-basierte Epoxidzusammensetzungen mit besonders hoher Glastemperatur in Verbindung mit hoher Zähigkeit beschrieben, die für eine Anwendung als strukturelle Verbundwerkstoffe in Frage kommen. In dem wissenschaftlichen Artikel von C. Pappa et al. 2022 wird eine Übersicht des Anwendungspotentials von Lignin und seinen Bio-Ölen für die Herstellung von thermohärtenden Epoxidpolymeren und Verbundwerkstoffen gegeben.

In der EP 3 552 791 A1 wird ein Verbundwerkstoff für die Herstellung von Lebensmittelverpackungen beschrieben, der aus einer thermoplastischen Matrix und Kaffeesatz und/oder Weizenkleie als Füllstoff bestehen.

Weiterhin ist aus der DE 10 2017 118 881 A1 bekannt, dass sich Gebrauchsgegenstände aus einem von Biopolymeren gebildeten Ummantelungsmaterial und einem aus Kaffeesatz beziehungsweise Kaffeepulver gebildeten Grundmaterial im Zusammenhang mit einem Spritzgussverfahren herstellen lassen. Der Kaffeesatz hat dabei bevorzugt einen Feuchtigkeitsgehalt von maximal 10 %. Die Biopolymere können dabei Bio-Polyolefine, Lignin, Cellulose, Stärke, Naturharze, Naturwachse, natürliche Öle und/oder natürliche Fettsäuren sein.

Nach wie vor sind jedoch der Verwendung von biogenen Rohstoffen, insbesondere als geschäumte Materialien auf Basis duroplastischer Polymere, Grenzen gesetzt. Oftmals genügen diese nicht den Anwendungsprofilen moderner Werkstoffe.

Der Erfindung liegt nun die Aufgabe zugrunde, geeignete schäumbare Zusammensetzungen auf Basis biogener Rohstoffe bereitzustellen, die sich als Kompositmaterialien in Schaummassen oder Schaumkörpern verarbeiten lassen.

Diese Aufgabe ist bei der vorliegenden Erfindung zunächst durch die Merkmale des Patentanspruchs 1 gelöst. Dabei ist vorgesehen, dass eine schäumbare Zusammensetzung folgende Komponenten umfasst: mindestens ein Epoxidharz und mindestens einen Härter für Epoxidharze, mindestens ein chemisches und/oder physikalisches Treibmittel sowie mindestens einen biogenen Rohstoff.

Es hat sich gezeigt, dass sich auf Basis von biogenen Rohstoffen, insbesondere Lignin und/oder Kaffeesatz, Epoxidharzen sowie Epoxidharz-Härtern sowie geeigneter Treibmittel besonders leichte, geschäumte beziehungsweise hohlraumhaltige Kompositmaterialien von hoher Festigkeit erhalten lassen. Die Anwesenheit von EP-Harzen sowie EP-Härtern ermöglicht es, schäumbare Zusammensetzungen bereitzustellen, die über eine verbesserte, chemische Beständigkeit verfügen. Die erfindungsgemäßen schäumbaren Zusammensetzungen können somit zu festen geschäumten beziehungsweise hohlraumhaltigen Kompositmaterialien verarbeitet werden.

Weitere bevorzugte Ausgestaltungen der Erfindung ergeben sich aus den übrigen, in den Unteransprüchen genannten Merkmalen.

Im Rahmen der vorliegenden Erfindung werden als biogene Rohstoffe solche Rohstoffe verstanden, die keinen fossilen Ursprung aufweisen und somit nicht petrochemisch erzeugt sind. Biogene Rohstoffe umfassen zum einen nachwachsende Rohstoffe, also Rohstoffe pflanzlichen Ursprungs, sowie Rohstoffe tierischen Ursprungs, die außerhalb des Ernährungsbereiches stofflich oder energetisch genutzt werden können. Vorzugsweise handelt es sich bei dem biogenen Rohstoff um einen nachwachsenden Rohstoff pflanzlichen Ursprungs.

In einer bevorzugten Ausgestaltung der erfindungsgemäßen Zusammensetzung ist vorgesehen, dass der biogene Rohstoff ausgewählt ist aus der Gruppe Cellulose-basierter Rohstoffe und/oder Cellulose-basierter Pflanzenfasern, Stärke-basierter Rohstoffe, Lignin, Chitin, Kaffeesatz, Kaffeepulver, eiweißbasierter Rohstoffe und/oder eiweißbasierte Fasern, beispielsweise Seiden, oder Chitosan.

In Anbetracht der Bestrebungen Materialien, die durch Einsatz von Erdöl hergestellt werden durch regenerative Materialien zu ersetzen, sind Materialien auf Basis von nachwachsenden/biogenen Rohstoffen besonders vorteilhaft, da diese als Neben-, Rest-, oder Abfallprodukte, zum Beispiel aus der Papierherstellung oder Lebensmittelproduktion anfallen.

Bei einer besonders bevorzugten Ausgestaltung der erfindungsgemäßen Zusammensetzung ist vorgesehen, dass der biogene Rohstoff Lignin und/oder Kaffeesatz ist.

Insbesondere im Hinblick auf die Herstellung geschäumter duroplastischer Kompositmaterialien hat sich die Verwendung von Lignin und/oder Kaffeesatz als biogene Rohstoffe besonders vorteilhaft gezeigt, da diese sich besonders gut mit den bisherigen, auf konventionelle Rohstoffe ausgerichtete Verfahren, verarbeiten lassen.

Kaffeesatz fällt in großen Mengen als Abfallprodukt an. Laut Statista beträgt der Pro-Kopf-Kaffeekonsum in Deutschland 4,77 kg p.a., was bei einer Einwohnerzahl von 84,3 Mio. Einwohnern in Deutschland einer Menge von 402.111 Tonnen p.a. entspricht. Somit fällt in Deutschland auch eine vergleichbare Menge an Kaffeesatz an. Gerade bei Großverbrauchern wie beispielsweise Kantinen, Bäckereien, Tankstellen, Restaurants, Raststätten und sonstigen Kaffeeautomaten, aber auch durch sogenannte Fehlröstungen in Kaffeeröstereien kann davon ausgegangen werden, dass hier Kaffeesatz beziehungsweise Kaffeepulver in lohnenswerter Menge anfällt und daher effektiv gesammelt und der stofflichen Verwertung zugeführt werden kann.

Es gibt Lignine in nicht derivatisierter Form und derivatisierte Lignine. Lignine beziehungsweise Ligninderivate fallen in großem Umfang bei der Cellulosegewinnung an und unterscheiden sich unter anderem in ihren Molekulargewichten, dem organischen Schwefelanteil und ihrer Wasserlöslichkeit. Eine Übersicht der Abhängigkeit der Eigenschaften der Lignine von deren Herstellungsverfahren gibt die folgende Tabelle (E. Fliedner et al., 2009):

| **Lignineigenschaften** | **Ligninsulfonate** | **Kraft** | **Soda** | **Organosolv** |
|---|---|---|---|---|
| Löslich in | Wasser | Basen, organische Lösemittel | Basen | Organische Lösemittel |
| Molmasse Mₙ (g/mol) | 15.000 - 50.000 | 1.000 - 3.000 | 800 - 3.000 | 500 - 5.000 |
| Molmassenverteilung Mₙ / M_{w} | 6 - 8 | 2,5 - 3,5 | 2,5 - 3,5 | 1,5 - 2,5 |
| Anteil an Gesamtzellstoffproduktion | 6% | 85% | 9% | 0% |
| Ligninvolumen (ca.) | 3.000.000 t | 42.500.000 t | 4.5 .00 t | --- |
| Nutzungsgrad | 33 % | 0,25 % | --- | --- |

In einer bevorzugten Ausgestaltung der vorliegenden Erfindung ist das Lignin ein Ligninsulfonat oder Kraftlignin, besonders bevorzugt ist Ligninsulfonat.

Unter dem Begriff "Ligninsulfonat" wird ein Salz der Ligninsulfonsäure verstanden, wobei Ligninsulfonsäure ein wasserlösliches, anionisches, polyelektrolytisches, verzweigtes Polymer ist. Ligninsulfonat fällt als Nebenprodukt bei der Papierherstellung mit dem Sulfitverfahren an. Dabei wird zu Hackschnitzeln zerkleinertes Holz unter Druck (zum Beispiel 5 bis 7 bar) für ca. 7 bis 15 Stunden in Gegenwart von Calciumhydrogensulfitlauge erhitzt und anschließend wird die Ligninsulfonsäure in Form von Calciumligninsulfonat über einen Wasch- und Fällungsprozess aus der Lignocellulose entfernt. Anstelle von Calciumhydrogensulfit lassen sich auch Magnesium-, Natrium- oder Ammoniumsulfit-Laugen verwenden, was zu den entsprechenden Magnesium-, Natrium- und Ammoniumsalzen der Ligninsulfonsäure führt.

Vorzugsweise wird Lignin in Form von für mindestens 24 h bei 70°C getrocknetem Ligninsulfonat (CAS Nr. 8061-54-9), wie zum Beispiel erhältlich als LIGNEX MG F von der Firma Sappi Biotech GmbH, Deutschland eingesetzt.

In einer weiteren Ausführungsform kann Ligninsulfonat, welches zuvor mindestens 48 Stunden bei 70°C getrocknet wurde, verwendet werden.

In einer weiteren bevorzugten Ausgestaltung der vorliegenden Erfindung liegt der Kaffeesatz als getrockneter Kaffeesatz mit einem Masseverlust zwischen 10 bis 50 Gew.-%, bevorzugt 12 bis 44 Gew.-%, besonders bevorzugt 16 bis 40 Gew.-%, bezogen auf das Gesamtgewicht, vor.

Durch Einstellung des Feuchtigkeitsgehalts des Kaffeesatzes und somit des Masseverlusts ergeben sich Kompositmaterialien, die über eine ausreichende Festigkeit und eine geschlossene, überwiegend glatte Oberflächenstruktur verfügen.

Erfindungsgemäß umfasst die schäumbare Zusammensetzung mindestens ein chemisches und/oder physikalisches Treibmittel.

Als chemische Treibmittel werden organische oder anorganische Substanzen bezeichnet, welche unter Einfluss von Temperatur, Feuchtigkeit, elektromagnetischer Strahlung oder Chemikalien gasförmige Substanzen bilden oder abspalten. Derartige Substanzen können Azodicarbonamide, Sulfohydrazide, Hydrogencarbonate oder Carbonate sein. Als physikalische Treibmittel können Verbindungen eingesetzt werden, welche beispielsweise bei Änderung der Temperatur, des Drucks oder des Volumens, insbesondere bei Erhöhung der Temperatur, in den gasförmigen Aggregatzustand übergehen und so durch Volumenexpansion eine Schaumstruktur bilden. Insbesondere können solche physikalischen Treibmittel Flüssigkeiten sein, welche bei erhöhter Temperatur verdampfen. Weiterhin können als physikalische Treibmittel Gase oder niedrigsiedende Flüssigkeiten eingesetzt werden, welche in mikroverkapselter Form in die Zusammensetzung eingebracht werden. Sowohl chemische als auch physikalische Treibmittel sind in der Lage, Schaumstrukturen in polymeren Zusammensetzungen zu erzeugen.

Vorzugsweise umfasst die erfindungsgemäße Zusammensetzung Natriumhydrogencarbonat und/oder Ammoniumhydrogencarbonat als chemisches Treibmittel.

Die Verwendung von Natriumhydrogencarbonat oder Ammoniumhydrogencarbonat als Treibmittel hat den Vorteil, dass die erfindungsgemäßen Zusammensetzungen eine hohe Standfestigkeit während des Schäumungsprozesses aufweisen.

In einer alternativen bevorzugten Ausführungsform umfasst die erfindungsgemäße Zusammensetzung ein oder mehrere thermisch expandierbare Mikrosphären.

Durch Einsatz von expandierenden Mikrosphären in den erfindungsgemäßen Zusammensetzungen können geschäumte beziehungsweise hohlraumhaltige und somit leichte und zugleich feste Kompositmaterialien mit hohen biogenen Anteilen hergestellt werden.

Geeignete expandierbare Mikrosphären bestehen aus einer thermoplastischen Schale, die mit thermisch expandierbaren Flüssigkeiten oder Gasen gefüllt ist. Derartige Mikrosphären sind beispielsweise kommerziell erhältlich unter dem Handelsnamen Expancel^{®} von der Firma Nouryon, Japan. Es ist typisch für erhältliche Mikrosphären, dass eine gegebene Probe einen Bereich verschiedener Größen enthält. Die in dieser Erfindung bereitgestellten Mikrosphären sind Hohlkugeln mit einem mittleren Durchmesser zwischen 5 und 40 µm, bevorzugt 9 bis 25 µm, besonders bevorzugt 9 bis 16 µm. Der mittlere Durchmesser D(0.5) wurde mittels Laserbeugung bestimmt (Low Angle Laser Light Scattering (LALLS) und bezieht sich auf die bereitgestellten Mikrosphären im unexpandierten Zustand.

Vorzugsweise werden Expancel^{®} DU Mikrosphären eingesetzt, besonders bevorzugt Expancel^{®} 031DU40 (Tₘₐₓ 118 - 133°C; Tₛₜₐᵣₜ 80 - 95°C; Dichte ≤ 12 kg/m³; Teilchengröße D(0,5) 10-16 µm) und Expancel^{®} 051DU40 (Tₘₐₓ 142 - 151°C; Tₛₜₐᵣₜ 105 - 110°C; Dichte ≤ 25 kg/m³; Teilchengröße D(0,5) 9 - 15 µm), wobei Expancel^{®} 051DU40 ganz besonders bevorzugt ist. Es ist ebenfalls möglich Mischungen verschiedener Arten von thermisch expandierbaren Mikrosphären einzusetzen.

Die expandierbaren Mikrosphären sind vorzugsweise bei einer Temperatur von <160°C, insbesondere von 80°C bis 151°C, bevorzugt von 90°C bis 140°C, expandierbar.

Ebenfalls umfasst die erfindungsgemäße Zusammensetzung mindestens ein Epoxidharz (EP-Harz) und mindestens einen Härter für Epoxidharze.

Geeignete EP-Harze können dabei Epoxid-Festharze oder Epoxid-Flüssigharze sein. Es können sowohl einkomponentige als auch zweikomponentige EP-Harze eingesetzt werden, bevorzugt ist der Einsatz von zweikomponentigen EP-Harzen. Als Epoxidharze können sowohl basisch beziehungsweise aminisch härtende Systeme, als auch Säure- beziehungsweise Säureanhydrid-härtende Epoxidharz-Systeme eingesetzt werden.

Als Epoxid-Festharze EP eignen sich insbesondere Epoxid-Festharze der Formel (II) 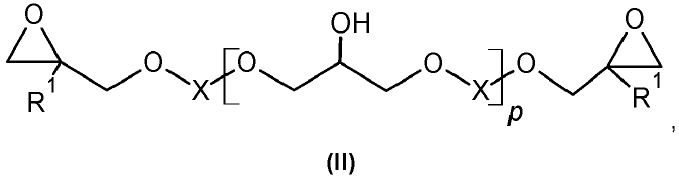 in welcher der Rest R¹ unabhängig voneinander jeweils für ein Wasserstoffatom oder für eine Methylgruppe steht, der Rest X unabhängig voneinander jeweils für einen zweiwertigen Rest eines Diphenols nach Entfernung der beiden Hydroxylgruppen steht und der Index p für einen Wert von >2, insbesondere von 2 bis 12, bevorzugt von 2 bis 7 steht.

Als Diphenol eignen sich insbesondere Diphenole, welche ausgewählt sind aus der Gruppe bestehend aus 1,4-Dihydroxybenzol, 1,3-Dihydroxybenzol, 1,2-Dihydroxybenzol, 1 ,3-Dihydroxytoluol, 3,5-Dihydroxybenzoate, 2,2-Bis(4-hydroxyphenyl)propan (= Bisphenol A), Bis(4-hydroxyphenyl)methan (= Bisphenol F), Bis(4-hydroxyphenyl)sulfon (= Bisphenol S), Naphtoresorcin, Dihydroxynaphthalin, Dihydroxy-anthrachinon, Dihydroxy-biphenyl, 3,3-bis(p-hydroxyphenyl)phthalide, 5,5-Bis(4-hydroxyphenyl)hexahydro-4,7-methanoindan, Phenolpthalein, Fluorescein, 4,4'-(bis-(hydroxyphenyl)-I ,3-Phenylenbis-(1-Methyl-ethyliden)] (= Bisphenol M), 4,4'-[bis-(hydroxyphenyl)-1,4-Phenylenbis-(1-Methyl-ethyliden)] (= Bisphenol P), 2,2'-Diallyl-bisphenol-A, Diphenole und Dikresole hergestellt durch Umsetzung von Phenolen oder Kresolen mit Di-isopropylidenbenzol sowie alle Isomeren der vorgenannten Verbindungen.

Bevorzugte Epoxid-Festharze weisen eine Glasübergangstemperatur Tg von > 25°C, insbesondere von > 30°C, auf, lassen sich typischerweise herstellen aus der Umsetzung von Verbindungen der Formel HO-X-OH mit Epichlorhydrin und/oder 2-Methyl-epichlorhydrin, wobei X bereits vorhergehend beschrieben worden ist. Dem Fachmann ist dabei klar, dass X im Epoxid-Festharz EP der Formel (II) unabhängig voneinander aus der beschriebenen Gruppe ausgewählt sein können.

Weiterhin können modifizierte Epoxid-Festharze, insbesondere fettsäuremodifizierte Epoxid-Festharze verwendet werden.

Ebenfalls kann das EP-Harz ein Epoxid-Flüssigharz sein. Bevorzugte Epoxid-Flüssigharze weisen die Formel (III) auf: 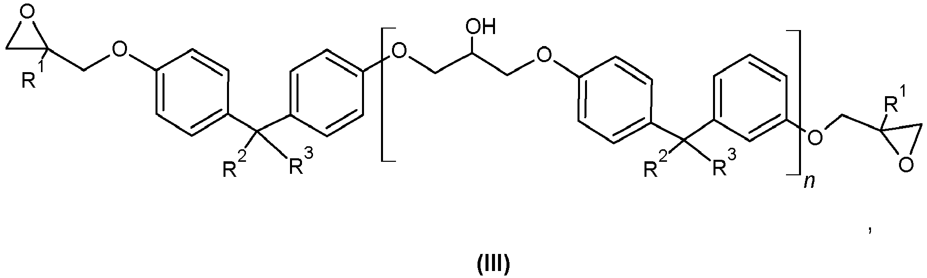 in welcher die Reste R¹, R² und R³ unabhängig voneinander entweder für H oder CH₃ stehen und der Index n für einen Wert von 0 bis 1, bevorzugt von < 0.2 steht.

Es handelt sich somit vorzugsweise um Diglycidylether von Bisphenol A (BADGE), von Bisphenol F (BFDGE) sowie von Bisphenol A/F. Die Bezeichnung "A/F" verweist hierbei auf eine Mischung von Aceton mit Formaldehyd, welche bei dessen Herstellung als Edukt verwendet wird. Besonders bevorzugt wird als EP-Harz ein Reaktionsprodukt Bisphenol-A-Epichlorhydrinharz mit einem Molekulargewicht kleiner gleich 700 (erhältlich als Dipon.DE^{®} Epoxyplast 100 P Komponente A) eingesetzt.

Die erfindungsgemäßen schäumbaren Zusammensetzungen umfassen ferner bei Anwesenheit des EP-Harzes mindestens einen Härter für Epoxidharze. Geeignete Härter sind bei Raumtemperatur im Wesentlichen inert und werden durch erhöhte Temperatur, typischerweise bei Temperaturen von 70°C oder mehr, aktiviert, wodurch die Härtungsreaktion gestartet wird. Es können die üblichen Härter für Epoxidharze eingesetzt werden.

Beispiele für geeignete Härter sind Dicyandiamid, Guanamine, Guanidine, Aminoguanidine und deren Derivate; substituierte Harnstoffe, insbesondere 3-(3-Chlor-4-methylphenyl)-1 ,1-dimethylharnstoff (Chlortoluron), oder Phenyl-dimethylharnstoffe, insbesondere p-Chlorphenyl-N,N-dimethyl-harnstoff (Monuron), 3-Phenyl-1,1-dimethylharnstoff (Fenuron) oder 3,4-Dichlorphenyl-N,N-dimethylharnstoff (Diuron), sowie Imidazole und Amin-Komplexe. Daneben können Carbonsäureanhydride, wie Phthalsäureanhydrid, 4- Methyl-phthalsäureanhydrid, 3,6- und 4,5-Dichlorphthalsäureanhydrid, 3,6- Difluorphthalsäure-anhydrid, Tetrabrom-, Tetrachlor- und Tetrafluorphthalsäureanhydrid, 3 und 4-Nitrophthalsäureanhydrid, Benzol-1,2,4,5-tetracarbonsäuredianydrid (Pyromellithsäuredianhydrid), 3,3',4,4'-Benzophenontetracarbonsäuredianhydrid, 2,2- Bis(3,4-benzoldicarboxyphenyl)propari-dianhydrid, 2,2-Bis(2,3benzoldicarboxyphenyl)- propandianhydrid, 2,2-Bis(4,4-benzol-dicarbonsäureanhydrid)perfluorpropan, Bis(3,4- dicarboxy-phenyl)etherdianhydrid, Bis(3,4-dicarboxylphenyl)methandianhydrid, 2,2',3,3- Diphenyltetracarbonsäuredianhydrid und 3,3',4,4'-Diphenyltetracarbonsäuredianhydrid zur Härtung verwendet werden. Die aromatischen Carbonsäureanhydride können zusätzliche funktionelle Gruppen enthalten. Als Beispiele seien genannt: Benzol-1,2,4-tricarbonsäure-anhydrid (Trimellithsäureanhydrid), 3-Hydroxyphthalsäureanhydrid, 3- bzw. 4-Maleinimidophthalsäureanhydrid sowie das 2-Sulfobenzoesäure-cyclo-anhydrid. Geeignet sind auch Derivate des Trimellithsäureanhydrids wie beispielsweise das Bistrimellithsäureanhydrid des Neopentylglykols.

Bevorzugt ist der EP-Härter Dipon.DE^{®} Epoxyplast 100 P Komponente B basierend auf einem Gemisch aus Phenol (styrolisiert), 1,3-Benzoldimethanamin, 2,2,4-Trimethylhexan-1,6-diamin, Phenol (metylstyrolisiert), Polyoxypropylendiamine und Salicylsäure.

Die zuvor genannte Aufgabe wird außerdem gelöst von einem Verfahren zur Herstellung einer geschäumten Zusammensetzung umfassend: in einem ersten Schritt Mischen von mindestens einem chemischen und/oder physikalischen Treibmittel und mindestens einem biogenen Rohstoff bei Raumtemperatur, dann Zugabe von mindestens einem Epoxidharz und mindestens einem Härter für Epoxidharze und erneutes Mischen bei Raumtemperatur und in einem zweiten Schritt Erhitzen der gesamten Mischung aus dem ersten Schritt für einen Zeitraum von 5 bis 20 min bei einer Temperatur von 145°C bis 220°C. Bevorzugt erfolgt im zweiten Schritt das Erhitzen für einen Zeitraum von 10 min bei 180°C oder 200°C.

Durch das erfindungsgemäße Verfahren ist es möglich, eine geschäumte Zusammensetzung herzustellen. Das erfindungsgemäße Verfahren kann vorteilhaft für industrielle Pressprozesse verwendet werden, da die Abmischungen lediglich für kurze Zeit (5 bis 20 min) erhitzt werden müssen.

Die obigen Ausführungen betreffend eine geschäumte Zusammensetzung gelten entsprechend auch für das erfindungsgemäße Verfahren.

In einer bevorzugten Ausgestaltungsform umfasst das erfindungsgemäße Verfahren ferner einen Vorbereitungsschritt, wobei dieser eine thermische Konditionierung des Kaffeesatzes bei 60 bis 80°C für 24 h bis 6 Tage oder bei 100°C bis 120°C für 20 bis 24 h, bevorzugt 22,5 h bis 24 h umfasst.

Durch die thermischen Konditionierungen werden Kompositmaterialien erhalten, die eine ausreichende Festigkeit und eine geschlossene, überwiegend glatte Oberflächenstruktur aufweisen.

Besonders bevorzugt kann die thermische Konditionierung des Kaffeesatzes einen Trocknungsschritt i) bei 70°C für 24 Stunden, ii) bei 70°C für sechs Tage oder iii) bei 110°C für 22,5 bis 24 Stunden umfassen. Es werden dabei Massenverluste von i) 12 bis 16 Gew.-%, 40 bis 44 Gew.-% oder iii) 18 bis 22 Gew.-% erreicht.

In einer zusätzlichen oder alternativen Ausgestaltungsform kann die thermische Konditionierung des Kaffeesatzes einen Trocknungsschritt iv) bei größer 100°C, bevorzugt 110°C für mehr als 24 Stunden umfassen. Im Fall des Trocknungsschritts iv) erfolgt in einem weiteren Schritt die Zugabe von 15 bis 25 Gew.-% Glycerin oder Rizinusöl. Alternativ können auch andere mehrwertige Alkohole, Fette oder Öle als weichmachende Zusätze eingesetzt werden.

Bevorzugt erfolgt der Trocknungsschritt i) bis iv) unter Umluftbedingungen.

Die Zugabe von 15 bis 25 Gew.-% Glycerin und/oder Rizinusöl ermöglicht die Trocknung des Kaffeesatzes bei Temperaturen ≥ 110°C oder über längere Zeiträume von ≥ 24 Stunden, ohne dass die Kompositmaterialien eine Versprödung aufweisen.

In einer ebenfalls bevorzugten Ausgestaltungsform umfasst das erfindungsgemäße Verfahren ferner einen Vorbereitungsschritt, wobei dieser einen Trocknungsschritt des Lignins bei 60°C bis 80°C für mindestens 48 h, bevorzugt 70°C für mindestens 48 h umfasst.

Durch die thermische Vorbehandlung des Lignins werden die Schaumeigenschaften, die Rieselfähigkeit und Dosierbarkeit der erfindungsgemäßen Zusammensetzungen weiter verbessert.

Vorzugsweise werden im ersten Schritt die Komponenten biogener Rohstoff, EP-Harz, Härter und Treibmittel in einem Massenverhältnis von 1 : 10 : 10 : 0,1 bis 20 : 10 : 10 : 10 gemischt.

Das Mischungsverhältnis der Komponenten Ligninsulfonat und/oder Kaffeesatz : EP-Harz : EP-Härter : Treibmittel (NaHCO₃) im erfindungsgemäßen Verfahren kann 1 : 10 : 10 : 0,1 bis 20 : 10 : 10 : 10, bevorzugt von 12,5 : 10 : 10: 1 bis 12,5 : 10 : 10: 10 betragen. Besonders bevorzugt ist das Mischungsverhältnis 12,5 : 10 : 10:5.

Das Mischungsverhältnis der Komponenten Ligninsulfonat und/oder Kaffeesatz : EP-Harz : EP-Härter : Treibmittel (Expancel^{®}) im erfindungsgemäßen Verfahren kann 1 : 10 : 10 : 0,1 bis 20 : 10 : 10 : 10, bevorzugt von 12,5 : 10 : 10 : 1 bis 12,5 : 10 : 10: 10 betragen. Besonders bevorzugt ist das Mischungsverhältnis 12,5 : 10 : 10 : 3,5.

In einer weiteren Ausgestaltung der vorliegenden Erfindung wird als biogener Rohstoff eine Mischung aus Lignin und Kaffeesatz eingesetzt, besonders bevorzugt in einem Mischungsverhältnis von 1 : 1.

Bevorzugt beträgt das Mischungsverhältnis der Komponenten Ligninsulfonat: Kaffeesatz : EP-Harz : EP-Härter: Treibmittel (Expancel^{®}) 6,5 : 6,5 : 10 : 10 : 3,5. Alternativ beträgt das Mischungsverhältnis der Komponenten Ligninsulfonat: Kaffeesatz : EP-Harz : EP-Härter: Treibmittel (NaHCO₃) 6,5 : 6,5 : 10 : 10 : 5.

Weiterhin ist vorgesehen, dass die aus dem zweiten Schritt erhaltene Zusammensetzung für einen Zeitraum von 20 h bis 48 h bei Raumtemperatur zur vollständigen Durchhärtung gelagert wird.

In einer Ausgestaltung der Erfindung können die erfindungsgemäßen Zusammensetzungen zur Herstellung von Kompositmaterialien verwendet werden.

In einer alternativen Ausgestaltung der Erfindung können die erfindungsgemäßen Zusammensetzungen zur Herstellung von Schaummassen und Schaumkörpern verwendet werden.

Die erfindungsgemäßen Zusammensetzungen können auch in Verbindung mit Additiven, insbesondere Füllstoffen, wie zum Beispiel Calciumcarbonat, eingesetzt werden.

Die erfindungsgemäßen Zusammensetzungen können ebenfalls in Verbindung mit Fasern, insbesondere Vliesstoffe, Gewirke, Gestricke, Gewebe, Geflechte, Gelege und Matten, wie zum Beispiel Glasfasermatten, Sisalfasermatten oder Hanffasermatten, zur Herstellung von Faserverbundwerkstoffen genutzt werden. Daneben können auch Basaltfasern, Kohlenstofffasern oder Aramidfasern zur Herstellung von Faserverbundwerkstoffen genutzt werden.

In einer vorteilhaften Ausgestaltung der Erfindung können die mit den erfindungsgemäßen Zusammensetzungen hergestellten Schaummassen beziehungsweise Schaumkörper beispielsweise als Material für die Reserveradmulde in Fahrzeugen, Kerne für Stoßfänger beziehungsweise sonstige Schockabsorber, als Kernmaterial für die Sonnenblenden, Kopfstützen oder andere Anwendungen im Fahrzeuginterieur eingesetzt werden. Ebenfalls ist eine Anwendung der erfindungsgemäßen Schaummassen beziehungsweise Schaumkörper in der Herstellung von Behältern oder Wärme-/Kälteboxen, beispielsweise für die Aufbewahrung oder den Transport von Speisen, Medikamenten, Insulin, Impfstoffen oder für Sonderladungsträger im Transportwesen oder in Behältern für Werkzeuge oder im Bereich der Gebäudedämmung, Thermoisolation von Kühlschränken und Gefriertruhen oder der Geräuschdämmung möglich.

Insgesamt lassen sich durch die erfindungsgemäßen Zusammensetzungen EPP- oder EPS-Schaummaterialien im Verpackungs- und Transportsektor ökologisch und ökonomisch vorteilhaft ersetzen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen erläutert.

### Ausführungsbeispiele

### A) Geschäumtes bzw. hohlraumhaltiges Kompositmaterial auf Basis von Kaffeesatz als biogener Rohstoff

### Beispiel A-1:

Im Beispiel A-1 wurde feuchter Kaffeesatz ohne thermische Konditionierung eingesetzt.

Die Bestandteile Kaffeesatz (KS), Treibmittel (Expancel^{®} 051 DU 40), EP-Harz (Dipon.de^{®} Epoxyplast 100 P), EP-Härter (Dipon.de^{®} Epoxyplast 100 P) werden in den in Tabelle 1 angegebenen Massenverhältnissen miteinander vermengt und bei 180°C für 10 min erhitzt. Neben der Expansion setzt auch die Vernetzung des EP-Harzes ein.

**Tabelle 1:**

| **Beispiel A-1** | **Masse [g]** | **Beschreibung** |
|---|---|---|
| KS feucht | 12,50 | relativ weiche, elastische Probe zu Beginn, später Nachhärtung; |
| Treibmittel (Expancel^{®} 051 DU 40) | 3,50 | |
| | | stark expandiert, ca. 4fach |
| EP-Harz | 10,00 | |
| EP-Härter | 10,00 | |
| | | |
| Summe | 36,00 | |

### Beispiel A-2:

Thermische Konditionierung des Kaffeesatzes: bei 70°C für 6 Tage

Die Bestandteile Kaffeesatz (KS), Treibmittel (Expancel^{®} 051 DU 40), EP-Harz (Dipon.de^{®} Epoxyplast 100 P), EP-Härter (Dipon.de^{®} Epoxyplast 100 P) werden in den in Tabelle 2 angegebenen Massenverhältnissen miteinander vermengt und bei 180°C für 10 min erhitzt. Neben der Expansion setzt auch die Vernetzung des EP-Harzes ein.

**Tabelle 2:**

| **Beispiel A-2** | **Masse [g]** | **Beschreibung** |
|---|---|---|
| KS | 12,50 | relativ stark expandiert, recht fest; |
| Treibmittel (Expancel^{®} 051 DU 40) | 3,50 | stark expandiert, ca. 3fach |
| EP-Harz | 10,00 | |
| EP-Härter | 10,00 | |
| | | |
| Summe | 36,00 | |

### Beispiel A-3:

Thermische Konditionierung des Kaffeesatzes: bei 110°C für 1,5 Tage

Die Bestandteile Kaffeesatz (KS), Treibmittel (Expancel^{®} 051 DU 40), EP-Harz (Dipon.de^{®} Epoxyplast 100 P), EP-Härter (Dipon.de^{®} Epoxyplast 100 P), Glycerin (Sigma Aldrich, G6279-1L, PCode: 102546367) werden in den in Tabelle 3 angegebenen Massenverhältnissen miteinander vermengt und bei 180°C für 10 min erhitzt. Neben der Expansion setzt auch die Vernetzung des EP-Harzes ein.

**Tabelle 3:**

| **Beispiel A-3** | **Masse [g]** | **Beschreibung** |
|---|---|---|
| KS | 12,50 | relativ stark expandiert, recht fest; |
| Treibmittel | 3,50 | stark expandiert, ca. 3fach; |
| EP-Harz | 10,00 | Oberfläche stumpf, nicht glatt, etwas zerklüftet |
| EP-Härter | 10,00 | |
| Glycerin | 2,50 | |
| Summe | 38,50 | |

### Beispiel A-4:

Thermische Konditionierung des Kaffeesatzes: bei 110°C für 1,5 Tage

Die Bestandteile Kaffeesatz (KS), Treibmittel (Expancel^{®} 051 DU 40), EP-Harz (Dipon.de^{®} Epoxyplast 100 P), EP-Härter (Dipon.de^{®} Epoxyplast 100 P), Rizinusöl werden in den in Tabelle 4 angegebenen Massenverhältnissen miteinander vermengt und bei 180°C für 10 min erhitzt. Neben der Expansion setzt auch die Vernetzung des EP-Harzes ein.

**Tabelle 4:**

| **Beispiel A-4** | **Masse [g]** | **Beschreibung** |
|---|---|---|
| KS | 12,50 | relativ stark expandiert, recht fest; |
| Treibmittel (Expancel^{®} 051 DU 40) | 3,50 | stark expandiert, ca. 3fach; |
| | | glatte, geschlossene Oberfläche |
| EP-Harz | 10,00 | |
| EP-Härter | 10,00 | |
| Rizinusöl | 2,50 | |
| Summe | 38,50 | |

### Beispiel A-5

Thermische Konditionierung des Kaffeesatzes: bei 70°C für 6 Tage

Die Bestandteile Kaffeesatz (KS), Treibmittel (NaHCOs, Omnilab, 13433-1KG, Artikel-Nr.: 1279891), EP-Harz (Dipon.de^{®} Epoxyplast 100 P), EP-Härter (Dipon.de^{®} Epoxyplast 100 P) werden in den in Tabelle 5 angegebenen Massenverhältnissen miteinander vermengt und bei 180°C für 10 min erhitzt. Neben der Expansion setzt auch die Vernetzung des EP-Harzes ein.

**Tabelle 5:**

| **Beispiel A-5** | **Masse [g]** | **Beschreibung** |
|---|---|---|
| KS | 12,50 | relativ weiche, elastische Probe zu Beginn, später Nachhärtung; |
| Treibmittel (NaHCO₃) | 5,00 | |
| EP-Harz | 10,00 | stark expandiert, ca. 4fach |
| EP-Härter | 10,00 | |
| | | |
| Summe | 37,50 | |

### Beispiel A-6:

Thermische Konditionierung des Kaffeesatzes: bei 110°C für 1,5 Tage

Die Bestandteile Kaffeesatz (KS), Treibmittel (NaHCO₃, Omnilab, 13433-1KG, Artikel-Nr.: 1279891), EP-Harz (Dipon.de^{®} Epoxyplast 100 P), EP-Härter (Dipon.de^{®} Epoxyplast 100 P), Glycerin (Sigma Aldrich, G6279-1L, PCode: 102546367) werden in den in Tabelle 6 angegebenen Massenverhältnissen miteinander vermengt und bei 180°C für 10 min erhitzt. Neben der Expansion setzt auch die Vernetzung des EP-Harzes ein.

**Tabelle 6:**

| **A-6** | **Masse [g]** | **Beschreibung** |
|---|---|---|
| KS | 12,50 | dunkelbraun, recht fest; |
| Treibmittel (NaHCO₃) | 5,00 | stark expandiert, ca. 4fach; |
| EP-Harz | 10,00 | glatte, geschlossene Oberfläche |
| EP-Härter | 10,00 | |
| Glycerin | 2,50 | |
| Summe | 40,00 | |

### Beispiel A-7:

Thermische Konditionierung des Kaffeesatzes: bei 110°C für 1,5 Tage

Die Bestandteile Kaffeesatz (KS), Treibmittel (NaHCO₃, Omnilab, 13433-1KG, Artikel-Nr.: 1279891), EP-Harz (Dipon.de^{®} Epoxyplast 100 P), EP-Härter (Dipon.de^{®} Epoxyplast 100 P), Rizinusöl (Sigma Aldrich, C9696-500ML, PCode: 1003442364) werden in den in Tabelle 7 angegebenen Massenverhältnissen miteinander vermengt und bei 180°C für 10 min erhitzt. Neben der Expansion setzt auch die Vernetzung des EP-Harzes ein.

**Tabelle 7:**

| **Beispiel A-7** | **Masse [g]** | **Beschreibung** |
|---|---|---|
| KS | 12,50 | dunkelbraun, recht fest; |
| Treibmittel (NaHCO₃) | 5,00 | wenig expandiert, ca. 2fach; |
| EP-Harz | 10,00 | glatte, geschlossene Oberfläche |
| EP-Härter | 10,00 | |
| Rizinusöl | 2,50 | |
| Summe | 40,00 | |

### B) Geschäumtes bzw. hohlraumhaltiges Kompositmaterial auf Basis von Lignin als biogener Rohstoff

### Beispiel B-1

Thermische Konditionierung des Ligninsulfonats: bei 70°C für mindestens 48 h

Die Bestandteile Ligninsulfonat (LS), Treibmittel (NaHCOs, Omnilab, 13433-1KG, Artikel-Nr.: 1279891), EP-Harz (Dipon.de^{®} Epoxyplast 100 P), EP-Härter (Dipon.de^{®} Epoxyplast 100 P) werden in den in Tabelle 8 angegebenen Massenverhältnissen miteinander vermengt und bei 200°C für 10 min erhitzt. Neben der Expansion setzt auch die Vernetzung des EP-Harzes ein.

**Tabelle 8:**

| **Beispiel B-1** | **Masse [g]** | **Beschreibung** |
|---|---|---|
| LS | 12,50 | dunkelbraun, sehr fest; |
| Treibmittel (NaHCO₃) | 5,00 | stark expandiert, ca. 3fach |
| EP-Harz | 10,00 | |
| EP-Härter | 10,00 | |
| | | |
| Summe | 37,50 | |

### Beispiel B-2

Thermische Konditionierung des Ligninsulfonats: bei 70°C für mindestens 48 h

Die Bestandteile Ligninsulfonat (LS), Treibmittel (Expancel^{®} 051 DU 40), EP-Harz (Dipon.de^{®} Epoxyplast 100 P), EP-Härter (Dipon.de^{®} Epoxyplast 100 P) werden in den in Tabelle 9 angegebenen Massenverhältnissen miteinander vermengt und bei 200°C für 10 min erhitzt. Neben der Expansion setzt auch die Vernetzung des EP-Harzes ein.

**Tabelle 9:**

| **Beispiel B-2** | **Masse [g]** | **Beschreibung** |
|---|---|---|
| LS | 12,50 | hellbraun, sehr fest; |
| Treibmittel (Expancel^{®} 051 DU 40) | 3,50 | stark expandiert, ca. 3fach |
| EP-Harz | 10,00 | |
| EP-Härter | 10,00 | |
| | | |
| Summe | 36,00 | |

### Beispiel B-3

Thermische Konditionierung des Ligninsulfonats: bei 70°C für mindestens 48 h

Die Bestandteile Ligninsulfonat (LS), Treibmittel (Expancel^{®} 051 DU 40), EP-Harz (Dipon.de^{®} Epoxyplast 100 P), EP-Härter (Dipon.de^{®} Epoxyplast 100 P) werden in den in Tabelle 10 angegebenen Massenverhältnissen miteinander vermengt und bei 180°C für 10 min erhitzt. Neben der Expansion setzt auch die Vernetzung des EP-Harzes ein.

**Tabelle 10:**

| **Beispiel B-3** | **Masse [g]** | **Beschreibung** |
|---|---|---|
| LS | 12,50 | hellbraun; |
| Treibmittel (Expancel^{®} 051 DU 40) | 3,50 | stark expandiert, ca. 3fach, sehr fest |
| EP-Harz | 10,00 | |
| EP-Härter | 10,00 | |
| | | |
| Summe | 36,00 | |

### Beispiel B-4

Thermische Konditionierung des Ligninsulfonats: bei 70°C für mindestens 48 h

Die Bestandteile Ligninsulfonat (LS), Treibmittel (NaHCO₃, Omnilab, 13433-1KG, Artikel-Nr.: 1279891), EP-Harz (Dipon.de^{®} Epoxyplast 100 P), EP-Härter (Dipon.de^{®} Epoxyplast 100 P) werden in den in Tabelle 11 angegebenen Massenverhältnissen miteinander vermengt und bei 180°C für 10 min erhitzt. Neben der Expansion setzt auch die Vernetzung des EP-Harzes ein.

**Tabelle 11:**

| **Beispiel B-4** | **Masse [g]** | **Beschreibung** |
|---|---|---|
| LS | 12,50 | dunkelbraun, etwas ungleichmäßig, unten fester, oben mehr geschäumt; |
| Treibmittel (NaHCO₃) | 5,00 | |
| EP-Harz | 10,00 | stark expandiert, ca. 3fach, sehr fest |
| EP-Härter | 10,00 | |
| | | |
| Summe | 37,50 | |

### C) Geschäumtes bzw. hohlraumhaltiges Kompositmaterial auf Basis von Kaffeesatz und Lignin als biogene Rohstoffe

### Beispiel C-1

Thermische Konditionierung des Ligninsulfonats: bei 70°C für mindestens 48 h Thermische Konditionierung des Kaffeesatzes: bei 110°C für 1 Tag und 24 h bei RT

Die Bestandteile Ligninsulfonat (LS), Kaffeesatz (KS), Treibmittel (NaHCOs, Omnilab, 13433-1KG, Artikel-Nr.: 1279891), EP-Harz (Dipon.de^{®} Epoxyplast 100 P), EP-Härter (Dipon.de^{®} Epoxyplast 100 P) werden in den in Tabelle 12 angegebenen Massenverhältnissen miteinander vermengt und bei 180°C für 10 min erhitzt. Neben der Expansion setzt auch die Vernetzung des EP-Harzes ein.

**Tabelle 12:**

| **Beispiel C-1** | **Masse [g]** | **Beschreibung** |
|---|---|---|
| LS | 6,50 | dunkelbraun, etwas ungleichmäßig, unten fester, oben mehr geschäumt; |
| KS | 6,50 | |
| Treibmittel (NaHCO₃) | 5,00 | stark expandiert, ca. 3fach, sehr fest |
| EP-Harz | 10,00 | |
| EP-Härter | 10,00 | |
| | | |
| Summe | 38,00 | |

### Beispiel C-2

Thermische Konditionierung des Ligninsulfonats: bei 70°C für mindestens 48 h Thermische Konditionierung des Kaffeesatzes: bei 110°C für 1 Tag und 24 h bei RT

Die Bestandteile Ligninsulfonat (LS), Kaffeesatz (KS), Treibmittel (Expancel^{®} 051 DU 40), EP-Harz (Dipon.de^{®} Epoxyplast 100 P), EP-Härter (Dipon.de^{®} Epoxyplast 100 P) werden in den in Tabelle 12 angegebenen Massenverhältnissen miteinander vermengt und bei 180°C für 10 min erhitzt. Neben der Expansion setzt auch die Vernetzung des EP-Harzes ein.

**Tabelle 13:**

| **Beispiel C-2** | **Masse [g]** | **Beschreibung** |
|---|---|---|
| LS | 6,50 | hellbraun, |
| KS | 6,50 | stark expandiert, ca. 3fach, sehr fest |
| Treibmittel (Expancel^{®} 051 DU 40) | 3,50 | |
| EP-Harz | 10,00 | |
| EP-Härter | 10,00 | |
| | | |
| Summe | 36,50 | |

### Zitierte Nicht-Patentliteratur

J. Sternberg et al., "Progress in Polymer Science" 113 (2021) 101344
F. H.M. Graichen et al. "Industrial Crops and Products" 106 (2017) 74 - 85
O.S.H. Santos, M. da Silvab, V.R. Silvaa, W.N. Mussela, M.I. Yoshida, "Journal of Hazardous Materials" 324 (2017) 406 - 413
X. Luo, A. Mohantya, M. Misra, "Industrial Crops and Products" 47 (2013) 13-19
X. Lu et al., "Int. Journal of Biological Macromolecules" (2023) 229 778 - 790
C. Gioia et al., "Biomacromolecules" (2020), 21, 1920 - 1928
C. Pappa et al., "Current Opinion in Green and Sustainable Chemistry" (2022), 38:100687

## Patentansprüche

1. Schäumbare Zusammensetzung umfassend mindestens ein Epoxidharz, mindestens einen Härter für Epoxidharze, mindestens ein chemisches und/oder physikalisches Treibmittel sowie mindestens einen biogenen Rohstoff.

2. Schäumbare Zusammensetzung nach Anspruch 1, wobei der biogene Rohstoff ausgewählt ist aus der Gruppe der Cellulose-basierter Rohstoffe und/oder Cellulose-basierter Pflanzenfasern, Stärke-basierter Rohstoffe, Lignin, Chitin, Kaffeesatz, Kaffeepulver, eiweißbasierter Rohstoffe und/oder eiweißbasierte Fasern oder Chitosan.

3. Schäumbare Zusammensetzung nach Anspruch 1 oder 2, wobei der biogene Rohstoff Lignin und/oder Kaffeesatz umfasst.

4. Schäumbare Zusammensetzung nach Anspruch 3, wobei der Kaffeesatz als getrockneter Kaffeesatz mit einem Masseverlust zwischen 10 bis 50 Gew.-%, bezogen auf das Gesamtgewicht, vorliegt.

5. Schäumbare Zusammensetzung nach einem der vorgehenden Ansprüche, wobei das chemische Treibmittel Natriumhydrogencarbonat und/oder Ammoniumhydrogencarbonat umfasst.

6. Schäumbare Zusammensetzung nach einem der vorgehenden Ansprüche, wobei das physikalische Treibmittel ein oder mehrere thermisch expandierbare Mikrosphären umfasst.

7. Verfahren zur Herstellung einer geschäumten Zusammensetzung nach einem der Ansprüche 1 bis 6, umfassend:
• in einem ersten Schritt Mischen von mindestens einem chemischen und/oder physikalischen Treibmittel und mindestens einem biogenen Rohstoff bei Raumtemperatur, dann Zugabe von mindestens einem Epoxidharz und mindestens einem Härter für Epoxidharze und erneutes Mischen bei Raumtemperatur und
• in einem zweiten Schritt Erhitzen der gesamten Mischung aus dem ersten Schritt für einen Zeitraum von 5 bis 20 min bei einer Temperatur von 145°C bis 220°C.

8. Verfahren nach Anspruch 7, ferner umfassend:
• einen Vorbereitungsschritt, umfassend thermische Konditionierung des Kaffeesatzes bei 60 bis 80°C für 24 h bis 6 Tage oder bei 100°C bis 120°C für 20 bis 24 Stunden.

9. Verfahren nach Anspruch 7, ferner umfassend:
• einen Vorbereitungsschritt, umfassend thermische Konditionierung des Kaffeesatzes bei größer 100°C für mehr als 24 Stunden und die Zugabe von 15 bis 25 Gew.-% Glycerin oder Rizinusöl in einem weiteren Schritt.

10. Verfahren nach einem oder mehreren der Ansprüche 7 bis 9, ferner umfassend:
• einen Vorbereitungsschritt, umfassend thermische Konditionierung des Lignins bei 60°C bis 80°C für mindestens 48 Stunden.

11. Verfahren nach einem oder mehreren der Ansprüche 7 bis 10, umfassend im ersten Schritt das Mischen der Komponenten biogener Rohstoff, EP-Harz, Härter und Treibmittel in einem Massenverhältnis von 1 : 10 : 10 : 0,1 bis 20 : 10 : 10 : 10.

12. Verwendung der schäumbaren Zusammensetzung nach einem oder mehreren der Ansprüche 1 bis 6 zur Herstellung von Kompositmaterialien.

13. Verwendung der schäumbaren Zusammensetzung nach einem oder mehreren der Ansprüche 1 bis 6 zur Herstellung von Schaummassen und Schaumkörpern.

14. Kraftfahrzeug umfassend zumindest eine schäumbare Zusammensetzung nach einem oder mehreren der Ansprüche 1 bis 6.
